# EUROPÄISCHE PATENTSCHRIFT

(11) **EP 0 980 965 B1**
(45) Veröffentlichungstag und Bekanntmachung des Hinweises auf die Patenterteilung: **19.11.2003**
(21) Anmeldenummer: 99111828.2
(22) Anmeldetag: 19.06.1999
(51) Int. Cl.: F01L 13/00, F01L 1/26, F02D 13/02, F02D 13/06

(54) **Verfahren zum Betrieb einer Brennkraftmaschine mit zwei Zylindergruppen und Ventiltrieb einer Brennkraftmaschine mit zwei Zylindergruppen**
Working method for an engine with 2 cylinder groups, and valve drive in an engine with 2 cylinder groups
Procédé de fonctionnement d'un moteur à 2 groupes de cylindres, et commande de soupape pour moteur à 2 groupes de cylindres

(30) Priorität: 17.08.1998 DE 19837098
(43) Veröffentlichungstag der Anmeldung: 23.02.2000
(73) Patentinhaber: Dr.Ing. h.c.F. Porsche Aktiengesellschaft, 70435 Stuttgart (DE)
(72) Erfinder: Voss, Hartmut, 71299 Wimsheim (DE); Grünberger, Joachim, 74343 Sachsenheim (DE)

(56) Entgegenhaltungen:
- EP-A- 0 583 583
- EP-A- 0 640 749
- DE-A- 19 606 054
- DE-C- 19 712 668
- US-A- 5 159 905
- US-A- 5 782 216

## Beschreibung

Die Erfindung betrifft ein Verfahren zum Betrieb einer mehrzylindrigen Brennkraftmaschine nach den Merkmalen des Oberbegriffs des Anspruchs 1.

Aus der DE 196 04 737 A1 ist ein gattungsgemäßes Verfahren zum Betrieb einer mehrzylindrigen Brennkraftmaschine bekannt. Diese Brennkraftmaschine hat zwei Gruppen von Zylindern, von denen eine erste ständig befeuert und die zweite Zylindergruppe zu- und abschaltbar betrieben wird. Im Betrieb dieser Brennkraftmaschine wird in einem unteren Gesamtlastbereich die zweite Zylindergruppe abgeschaltet und die erste Zylindergruppe zwischen ihrer Null- und Vollast betrieben. In einem oberen Gesamtlastbereich wird die zweite Zylindergruppe zugeschaltet und zwischen ihrer Null- und Vollast betrieben. Die erste Zylindergruppe wird in diesem oberen Lastbereich ständig mit ihrer Vollast betrieben. Ein derartiges Verfahren zum Betrieb einer mehrzylindrigen Brennkraftmaschine hat den Nachteil, daß für die beiden Zylindergruppen vollständig getrennte Sauganlagen und Sauganlagensteuerungen erforderlich sind. Dazu sind dann auch zwei getrennte Steuer- bzw. Regeleinheiten und zwei damit verbundene Luftmassen- bzw. Luftmengenmesser erforderlich.

Aus der DE 196 06 054 A1 ist weiterhin ein Ventiltrieb einer Brennkraftmaschine bekannt, der mit einer Einrichtung zur Veränderung der Ventilphasen und mit umschaltbaren Hubübertragungselementen betrieben wird. Durch die umschaltbaren Hubübertragungselemente kann dabei unabhängig von der eingestellten Ventilöffnungsphase der Ventilhub der zugeordneten Gaswechselventile mit großem bzw. kleinerem Ventilhub betrieben werden. Mit einem derartigen Ventiltrieb läßt sich die Brennkraftmaschine in Abhängigkeit von Drehzahl und Last in verschiedenen Betriebsmodi mit jeweils optimierten Verbrauchs- und Emissionswerten betreiben.

Aus der EP 0 640 749 A1 ist ein Verfahren zum Betreiben einer Brennkraftmaschine mit einer ersten, ständig befeuerten Zylindergruppe und einer zweiten, unabhängig davon zu -und abschaltbaren Zylindergruppe bekannt, wobei in einem unteren Lastbereich die zweite Zylindergruppe abgeschaltet und die erste Zylindergruppe mit last- und/oder drehzahlabhängig veränderbarem Ventilhub betrieben wird.

Der Erfindung liegt demgegenüber die Aufgabe zugrunde, das gattungsgemäße Verfahren zum Betrieb einer mehrzylindrigen Brennkraftmaschine dahingehend zu verbessern, daß mit geringem steuerungstechnischem Aufwand eine weitere Verbrauchsreduktion insbesondere im Leerlauf und bei geringer Last erzielt werden kann.

Diese Aufgabe wird erfindungsgemäß durch die im Ansprüch 1 angegebenen Merkmale erreicht. Wird bei einer Brennkraftmaschine mit einer ersten, ständig befeuerten Zylindergruppe und einer zweiten, unabhängig davon zu- und abschaltbaren Zylindergruppe die erste Zylindergruppe mit unterschiedlichen Ventilhüben betrieben, kann sowohl in einem Lastbereich mit nicht befeuerter zweiter Zylindergruppe als auch in einem Lastbereich mit befeuerter zweiter Zylindergruppe im jeweils unteren Teil dieser Lastbereiche eine deutliche Verbrauchsreduktion durch Betrieb mit einem kleineren Ventilhub erreicht werden. Ein derartiger Betrieb hat den Vorteil, daß aufgrund der geringeren Ventilhübe im jeweils unteren Lastbereich eine deutliche Reduzierung der Reibleistung und eine weitgehende Entdrosselung des Ansaugvorganges erfolgt. Insbesondere im Leerlaufbereich - bei abgeschalteter zweiter Zylindergruppe - läßt sich damit gleichzeitig eine höhere Laufruhe der Brennkraftmaschine gewährleisten. Ein derartiges Verfahren kann dabei mit relativ geringem Aufwand im gesamten Ansaugtrakt betrieben werden, da insbesondere eine Auftrennung der Sauganlage auf die beiden unterschiedlich betriebenen Zylindergruppen nicht notwendig ist.

Wird bei einem gattungsgemäßen Ventiltrieb die zu- und abschaltbare Zylindergruppe so ausgelegt, daß die jeweils zugeordneten Ventilhübe unterschiedlich sind und im abgeschalteten Zustand der Ventilhub der Einlaßventile Null bzw. minimal ist, kann durch Ventilhubumschaltung der anderen Zylindergruppe zwischen einem mittleren Hubverlauf und einem großen Hubverlauf noch einmal eine deutliche Kraftstoffeinsparung erreicht werden. Im unteren Gesamtlastbereich können damit durch Abschalten der zweiten Zylindergruppe und Betrieb der ersten Zylindergruppe mit kleinem Ventilhub deutliche Verbesserungen der Reibleistung erzielt werden.

Wird die Brennkraftmaschine sowohl bei nicht befeuerter als auch bei ständig befeuerter Zylindergruppe in dem jeweils unteren Bereich der zugeordneten Lastbereiche mit kleinem Ventilhub der ständig befeuerten Zylindergruppe betrieben, können vor allem durch die Reduzierung der Reibleistung noch einmal deutliche Verbrauchsvorteile erzielt werden. Durch die Verringerung der Ventilhübe in den jeweils unteren Lastbereichen ist darüber hinaus eine bessere Entdrosselung auf der Saugseite der Brennkraftmaschine möglich.

Wird die Brennkraftmaschine bei abgeschalteter und/oder ständig befeuerter zweiter Zylindergruppe mit großem Ventilhub der ersten Zylindergruppe betrieben, kann in den jeweils oberen Bereichen der zugeordneten Lastbereiche ein höherer Füllungsgrad der Zylinder erreicht werden, wodurch sowohl bei zu- als auch bei abgeschalteter zweiter Zylindergruppe deutliche Leistungs- und Drehmomentvorteile erreicht werden.

Im jeweiligen Teillastbereich der ständig befeuerten Zylindergruppe läßt sich eine verbesserte Zylinderbefüllung erreichen, wenn jeder Zylinder dieser Zylindergruppe mit zwei Einlaßventilen betrieben wird, die unterschiedliche Ventilhübe aufweisen. Durch diese unterschiedlichen Ventilhübe je Zylinder kann eine gezielte Verwirbelung (swirl) erzielt werden. Durch diese gezielte Verwirbelung des einströmenden Brennstoff-Luft-Gemisches bzw. der angesaugten Luft kann insbesondere im Teillastbereich das Füllungsverhalten und der Verbrennungsvorgang verbessert werden.

Ein derartiger Ventiltrieb ist besonders platzsparend, wenn das Hubübertragungselement nach Art eines Tassenstößels mit zwei konzentrischen Hubelementen aufgebaut ist. Ein solcher Ventiltrieb kann mit relativ geringem Mehraufwand einen herkömmlichen Ventiltrieb mit Tassenstößeln ersetzen.

Ein Ausführungsbeispiel der Erfindung ist in der nachfolgenden Beschreibung und Zeichnung näher erläutert. Letztere zeigt in
- Fig. 1: eine schematische Darstellung der Brennkraftmaschine,
- Fig. 2: eine schematische Darstellung des Ventiltriebes und
- Fig. 3: ein Schaltkennfeld des Ventiltriebes, in dem die unterschiedlichen Betriebsmodi des Ventiltriebes in Abhängigkeit von Drehzahl und Last bzw. effektivem Mitteldruck aufgetragen sind.

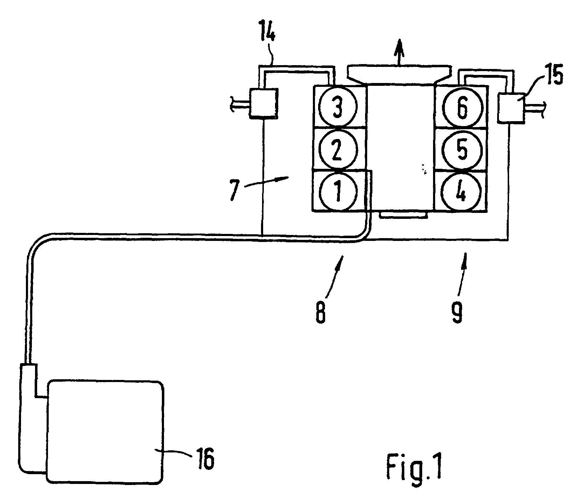

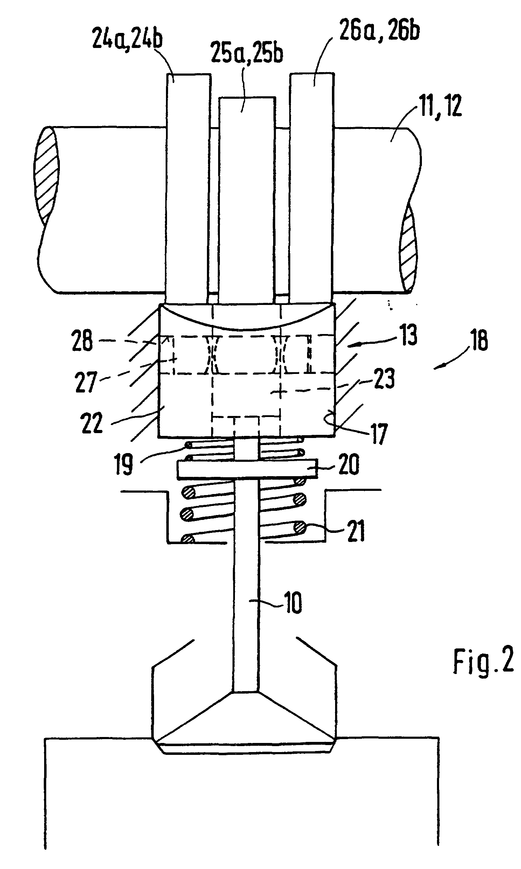

Bei der in Fig. 1 schematisch dargestellten Brennkraftmaschine 7 handelt es sich - ohne Beschränkung auf diese Ausführungsform - um einen sechszylindrigen Boxer-Motor mit Zylindern 1 bis 6. Die Zylinder 1 bis 3 bilden eine erste Zylinderbank bzw. Zylindergruppe 8 und die Zylinder 4 bis 6 eine zweite Zylinderbank bzw. Zylindergruppe 9. Die in Fig. 2 näher dargestellten Gaswechselventile 10 werden von einer Nockenwelle 11, 12 betätigt. Dabei werden die Gaswechselventile 10 in Abhängigkeit von Drehzahl und/oder Last mit unterschiedlichen Ventilhüben betrieben. Dazu wird das jeweilige Hubübertragungselement 13 durch Ansteuerung über das Hydraulikventil 14 bzw. 15 in seine entsprechende Schaltstellung geschaltet. Ein zentrales Steuergerät 16 steuert sowohl die Brennkraftmaschine im allgemeinen als auch die Hydraulikventile 14 und 15 im besonderen.

Der in Fig. 2 schematisch dargestellte Ventiltrieb zeigt exemplarisch ein als Einlaßventil dienendes Gaswechselventil 10, das über ein als tassenförmiger Stößel ausgebildetes Hubübertragungselement 13 von einer Nockenwelle 11, 12 betätigt wird. Dieser Ventiltrieb stellt in dem hier beschriebenen Ausführungsbeispiel jeweils die Einlaßseite eines Zylinders dar. Dabei ist der konstruktive Aufbau des Ventiltriebes für beide Zylindergruppen 8 und 9 im wesentlichen gleich und unterscheidet sich nur - wie nachfolgend näher beschrieben - durch die betriebspunktabhängige Hubhöhe. Die Einlaßventile 10 der ersten Zylindergruppe 8 werden dabei über eine Nockenwelle 11 und die Einlaßventile der zweiten Zylindergruppe 9 über eine zweite Nockenwelle 12 betätigt. Jeder der Stößel 13 ist in einer Bohrung 17 eines Zylinderkopfes 18 eingesetzt und stützt sich über eine Druckfeder 19 an einem am Gaswechselventil 10 fest angebrachten Ventilteller 20 ab. An der Unterseite des Ventiltellers 20 stützt sich eine Ventilfeder 21 ab, die gegenüberliegend am Zylinderkopf anliegt und das Gaswechselventil 10 in seine geschlossene Venfilstellung bewegt.

Das als tassenförmiger Stößel ausgebildete Hubübertragungselement 13 weist zwei konzentrische Tassenelemente 22, 23 auf, die mit jeweils unterschiedlichen Teilnocken 24a, 24b bis 26a, 26b der Nockenwelle 11 bzw. 12 zusammenwirken. Die beiden äußeren Teilnocken 24a, 24b und 26a, 26b sind gleich ausgebildet, d.h. sie haben die gleiche Hubhöhe und Phasenlage. Diese beiden Teilnocken wirken mit dem äußeren 22 der beiden Tassenelemente zusammen. Der mittlere Teilnocken 25a, 25b hat eine geringere Hubhöhe und wirkt mit dem inneren Tassenelement 23 zusammen. Die beiden Tassenelemente 22 und 23 sind über Koppelelemente 27, die verschieblich in einer querverlaufenden Bohrung 28 angeordnet sind, koppelbar bzw. entkoppelbar. Dazu werden die Koppelelemente 27 über das Hydraulikventil 14 bzw. 15 entsprechend mit Druck beaufschlagt. In der in Fig. 2 dargestellten Schaltstellung des Koppelelementes 27 sind die beiden Tassenelemente 22 und 23 nicht miteinander gekoppelt, so daß die Hubbewegung des mittleren Teilnockens 25a, 25b über das innere Tassenelement 23 auf das Gaswechselventil 10 übertragen wird.

In dieser ungekoppelten Schaltstellung wird das äußere Tassenelement 22 von den Teilnocken 24a, 24b und 26a, 26b unabhängig vom inneren Tassenelement 23 bewegt, ohne daß seine Hubbewegung auf das Gaswechselventil übertragen wird. In der zweiten - nicht dargestellten - Schaltstellung des Koppelelementes 27 sind die beiden Tassenelemente 22 und 23 miteinander gekoppelt. In dieser Schaltstellung folgt das Gaswechselventil 10 dem Hubverlauf der beiden äußeren Teilnocken 24a, 24b und 26a, 26b und wird mit entsprechend größerem Ventilhub betätigt.

Die Teilnocken 24a, 24b und 26a, 26b sind für beide Zylindergruppen 8 und 9 so ausgelegt, daß sie einen größeren Ventilhub bewirken. Es ist dabei ohne weiteres möglich, daß die Hubkurven der äußeren Teilnocken für beide Zylindergruppen gleich sind. Der mittlere Teilnocken 25a, 25b ist für die beiden Zylindergruppen 8, 9 unterschiedlich ausgelegt.

Die mittleren Teilnocken 25a für die erste, ständig befeuerte Zylindergruppe 8 sind so ausgelegt, daß sie einen geringeren Hubverlauf als die entsprechenden äußeren Teilnocken 24a und 26a aufweisen. Darüber hinaus können diese mittleren Teilnocken auch eine an den jeweils zugeordneten Betriebsbereich angepaßte andere Phasenlage aufweisen.

Im Fall der zweiten, zu- und abschaltbaren Zylindergruppe 9 ist der Teilnocken 25b so ausgelegt, daß seine auf das Gaswechselventil 10 übertragende Hubhöhe Null ist, so daß in der entsprechenden Schaltstellung des Hubübertragungselementes 13 das Gaswechselventil 10 bzw. das Einlaßventil nicht geöffnet wird. Es ist jedoch auch möglich, die Hubhöhe des mittleren Teilnockens 25b für die zweite Zylindergruppe 9 so auszulegen, daß ein sehr geringer Ventilhub auf das Gaswechselventil 10 übertragen wird. Mit einer derartigen Auslegung kann verhindert werden, daß sich auf der brennraumabgewandten Seite des Einlaßventils Kraftstoff ansammelt, der nach dem Wiederzuschalten in den Brennraum gelangen würde und dort zu einer kurzfristig ungeregelten Verbrennung führen könnte.

Eine derartige Brennkraftmaschine kann in Abhängigkeit von der jeweiligen Ansteuerung mit vier verschiedenen Betriebszuständen des Gesamtventiltriebes betrieben werden:
Betriebszustand A: Zweite Zylindergruppe 9 abgeschaltet (Ventilhub Null, wirksamer Teilnocken 25b) und erste Zylindergruppe 8 mit kleinem Ventilhub (wirksamer Teilnocken 25a),
Betriebszustand B: Zweite Zylindergruppe 9 abgeschaltet (Ventilhub Null, wirksamer Teilnocken 25b) und erste Zylindergruppe 8 mit großem Ventilhub (wirksame Teilnocken 24a, 26a),
Betriebszustand C: Zweite Zylindergruppe 9 zugeschaltet (großer Ventilhub, wirksame Teilnocken 24b, 26b) und erste Zylindergruppe 8 mit kleinem Ventilhub (wirksamer Teilnocken 25a) und
Betriebszustand D: Zweite Zylindergruppe 9 zugeschaltet (großer Ventilhub, wirksame Teilnocken 24b, 26b) und erste Zylindergruppe 8 mit großem Ventilhub (wirksame Teilnocken 24a, 26a).

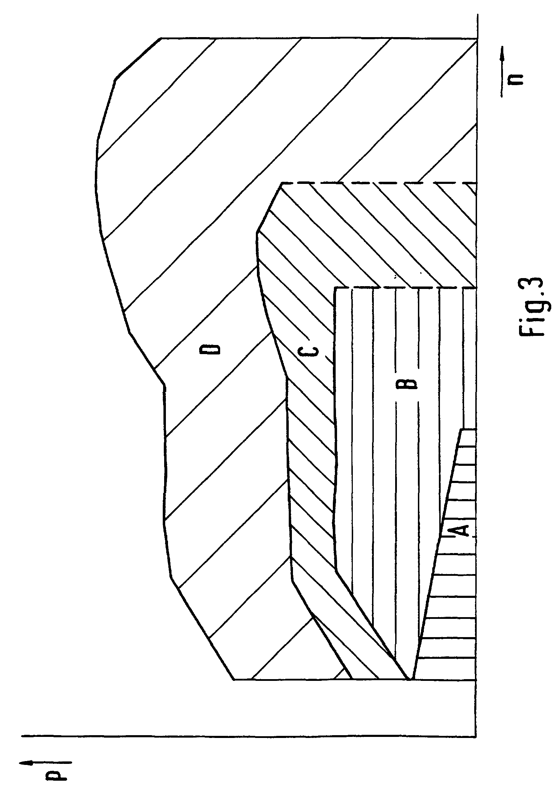

Ein besonders verbrauchsgünstiger und dennoch leistungsfähiger Betrieb einer Brennkraftmaschine ergibt sich, wenn diese in Abhängigkeit von Drehzahl und Last in einem der vier Betriebspunkte A bis D anhand des in Fig. 3 dargestellten Kennfeldes betrieben wird. Es hat sich gezeigt, daß ein großes Potential zur Verbrauchsabsenkung beim Betrieb einer derartigen Brennkraftmaschine durch Optimierung des Teillastverbrauches und des Leerlaufverbrauches durch optimierte Verbrennung, Verringerung der Ladungswechselverluste und Absenkung der Reibleistung liegt. Deutliche Verbrauchsvorteile im Teillastbereich werden dabei mit verringertem Ventilhub durch die Reduzierung der Ventilöffnungskräfte und damit verringertem Reibmitteldruck erreicht. Da bei niedrigen Drehzahlen der Brennkraftmaschine die mechanischen Verluste bis zu 50% durch Antriebsverluste des Ventiltriebes verursacht werden, ist damit insbesondere im Teillast- und Leerlaufbereich eine deutliche Verbrauchsreduzierung zu erzielen.

Im Leerlaufbetrieb und in der Nähe des Leerlaufbetriebes, bei geringen Drehzahlen und Lasten wird die Brennkraftmaschine mit abgeschalteter zweiter Zylindergruppe und geringen Hubhöhen der ersten Zylindergruppe betrieben (Betriebszustand A). Der in der Praxis am häufigsten genutzte mittlere Kennfeldbereich (Teillastbereich) mit geringen bis mittleren Lastanforderungen kann insbesondere zur Verbrauchsreduzierung im unteren Abschnitt dieses Bereiches mit zwei unterschiedlichen Teillastmodi betrieben werden. Bei geringer Last und geringer Drehzahl wird die Brennkraftmaschine mit abgeschalteter zweiter Zylindergruppe und kleinem Ventilhub der ersten Zylindergruppe betrieben. Im höheren Teillastbereich, bei höheren Lastanforderungen und/oder Drehzahlen wird die Brennkraftmaschine mit zugeschalteter zweiter Zylindergruppe und geringem Ventilhub der ersten Zylindergruppe betrieben (Betriebszustand C). Im Vollastbereich der Brennkraftmaschine werden beide Zylindergruppen mit großem Ventilhub betrieben (Betriebszustand D).

Ein derartiges Betriebsverfahren ist ohne weiteres für eine Vielzahl von Bauformen von Brennkraftmaschinen geeignet, die mindestens zwei Zylinder aufweisen und von denen mindestens jeweils ein Zylinder ständig befeuert und ein zweiter zu- bzw. abschaltbar betrieben wird.

Dieses Betriebsverfahren ist dabei ohne weiteres auch für Ventiltriebe geeignet, die mit anderen als denen hier exemplarisch beschriebenen Hubübertragungselementen zusammenwirken. Es ist dabei ohne weiteres möglich, anstelle der umschaltbaren Tassenstößel entsprechend ausgebildete Schlepp- oder Kipphebelventiltriebe einzusetzen.

## Patentansprüche

1. Verfahren zum Betrieb einer mehrzylindrigen Brennkraftmaschine mit einer ersten, ständig befeuerten Zylindergruppe und einer zweiten, unabhängig davon zu- und abschaltbaren Zylindergruppe, **dadurch gekennzeichnet, daß** in einem unteren Lastbereich die zweite Zylindergruppe (9) abgeschaltet und in einem oberen Lastbereich zugeschaltet ist, und daß die erste Zylindergruppe (8) in beiden Lastbereichen mit last- und/oder drehzahlabhängig veränderbarem Ventilhub betrieben wird, dadurch gekennzeichet, daß
im Leerlaufbereich die zweite Zylindergruppe (9) abgeschaltet und die erste Zylindergruppe (8) mit kleinem Ventilhub betrieben wird,
in einem unteren Teillastbereich die zweite Zylindergruppe (9) abgeschaltet und die erste Zylindergruppe (8) mit großem Ventilhub betrieben wird, und
in einem oberen Teillastbereich die zweite Zylindergruppe (9) zugeschaltet und die erste Zylindergruppe (8) mit kleinem Ventilhub betrieben wird.

2. Verfahren zum Betrieb einer mehrzylinderigen Brennkraftmaschine nach Anspruch 1, **dadurch gekennzeichnet, daß** im Vollastbereich die zweite Zylindergruppe (9) zugeschaltet und die erste Zylindergruppe (8) mit großem Ventilhub betrieben wird.

## Claims

1. A method of operating a multiple-cylinder internal-combustion engine with a first cylinder group constantly in operation and a second cylinder group which can be turned on and off independently of the former, **characterized in that** in a lower load range the second cylinder group (9) is turned off and in an upper load range is turned on, and the first cylinder group (8) is operated in both load ranges with a valve stroke variable in a manner dependent upon the load and/or the rotational speed, **characterized in that** in the idling range the second cylinder group (9) is turned off and the first cylinder group (8) is operated with a small valve stroke, in a lower partial-load range the second cylinder group (9) is turned off and the first cylinder group (8) is operated with a large valve stroke, and in an upper partial-load range the second cylinder group (9) is turned on and the first cylinder group (8) is operated with a small valve stroke.

2. A method of operating a multiple-cylinder internal-combustion engine according to Claim 1, **characterized in that** in the full-load range the second cylinder group (9) is turned on and the first cylinder group (8) is operated with a large valve stroke.

## Revendications

1. Procédé pour faire fonctionner un moteur à combustion interne à plusieurs cylindres comportant un premier groupe de cylindres constamment en marche et une deuxième groupe de cylindres pouvant être mis en marche et à l'arrêt indépendamment du premier, **caractérisé en ce que**, dans un domaine de charge inférieur, le deuxième groupe de cylindres (2) est mis à l'arrêt et dans un domaine de charge supérieur, il est mis en marche, et **en ce que** le premier groupe de cylindres (8) fonctionne dans les deux domaines de charge avec course des soupapes variable suivant la charge et/ ou la vitesse de rotation, **caractérisé en ce que** dans le domaine du ralenti le deuxième groupe de cylindres (9) est mis à l'arrêt et le premier groupe de cylindres (8) fonctionne avec une petite course des soupapes, dans un domaine inférieur de charge partielle, le deuxième groupe de cylindres (9) est mis à l'arrêt et le premier groupe de cylindres (8) fonctionne avec une grande course des soupapes, et dans un domaine supérieur de charge partielle, le deuxième groupe de cylindres (9) est mis en marche et le premier groupe de cylindres (8) fonctionne avec une petite course des soupapes.

2. Procédé pour faire fonctionner un moteur à combustion interne à plusieurs cylindres selon la revendication 1, **caractérisé en ce que** dans le domaine de pleine charge, le deuxième groupe de cylindres (9) est mis en marche et le premier groupe de cylindres (8) fonctionne avec une grande course des soupapes.
